# EUROPEAN PATENT APPLICATION

(11) **EP 4 585 358 A2**
(43) Date of publication of application: **16.07.2025**
(21) Application number: 24188517.7
(22) Date of filing: 15.07.2024
(51) Int. Cl.: B23P 19/04

(54) **A DEVICE FOR ASSEMBLING THREE WORKPIECES TOGETHER**

(30) Priority: 10.01.2024 CN 202410041914; 09.05.2024 CN 202420997922 U
(71) Applicant: Global Manufacturing Partners Holdings Limited, Kowloon Bay Kowloon (HK)
(72) Inventor: CHIU, Wilson, Kowloon (HK)
(74) Representative: Valet Patent Services Limited

(57) **Abstract**

The present invention discloses a device for assembling three workpieces (101,102,103) together. The setting of the first driving mechanism (5) on the device body (1) facilitates the driving of the clamping component (7) through the feeding mechanism (2), horizontal rod (3), and limit seat (4). The setting of the second driving mechanism (6) on the first seat body facilitates the driving of the second seat body up and down, ultimately facilitating the driving of the clamping component up and down; The setting of the connecting pressure block on the second body is driven by a third driving mechanism, which facilitates the first and second workpieces to be pressed down from top to bottom when being clamped into the third workpiece, preventing its displacement. On the other hand, it prevents the workpiece from being lifted when the clamping component moves upwards after assembly is completed.

## Description

### CROSS-REFERENCE TO RELATED APPLICATIONS

This application claims the benefit and priority of Chinese patent application No. 202410041914.6, filed on January 10, 2024; and Chinese patent application No. 202420997922.3, filed on May 09, 2024, disclosure of which is hereby incorporated by reference in its entirety.

### TECHNICAL FIELD

The present invention relates to a device for assembling three workpieces together.

### BACKGROUND

At present, the process of assembling the first workpiece and the second workpiece separately and then assembling them onto the third workpiece in existing technology is as follows: the first workpiece is clamped to the side of the second workpiece by the first gripper without releasing it, and the first gripper only releases the first workpiece after the second gripper clamps the first and second workpiece together. Then, the second gripper moves the two clamped workpieces together onto the third workpiece. There are the following problems: firstly, two grippers are used, and each gripper is conFIG.d with corresponding motion mechanisms, which is difficult to implement and increases energy consumption; secondly, when the shape of the workpiece is small, it is not convenient for the workpiece to relay between the grippers, and it is necessary to solve this problem.

### SUMMARY

TThe present invention overcomes the shortcomings of the aforementioned technology and provides a device for assembling three workpieces together.

To achieve the above objectives, the present invention adopts the following technical solutions:
A device for assembling three workpieces together, comprising a device body 1, wherein the device body 1 is provided with a feeding mechanism 2 for outputting a first workpiece 101 upwards, a horizontal rod 3 for providing a second workpiece 102 to be placed on it, and a limit seat 4 for limiting the third workpiece 103. The device body 1 is driven by a first driving mechanism 5 to be connected to a first seat 50 that can move left and right through the feeding mechanism 2, a horizontal rod 3, and a limit seat 4. The first seat 50 is driven by The second driving mechanism 6 is connected to a second seat 60 that can move up and down, and the second seat 60 is provided with a first workpiece 101 for receiving the upward output Afterwards, the first workpiece 101 and the second workpiece 102 are clamped together to facilitate the subsequent clamping of both into the third workpiece 103 from top to bottom. The clamping component 7 is connected to the second seat 60 through a third driving mechanism 8, which is capable of moving up and down. When the first workpiece 101 and the second workpiece 102 are clamped into the third workpiece 103 from top to bottom, a pressing block 9 is connected to the third workpiece 103 from top to bottom. The device body 1 is driven by a fourth driving mechanism 11, which is connected to a connecting piece that can rotate horizontally. The middle of the horizontal rod 3 is installed on the connecting piece 12, and a second workpiece 102 is sleeved at both ends of each horizontal rod 3.

In an embodiment of the present disclosure, wherein the feeding mechanism 2 comprises a vibration disk 21 for vibration output of a first workpiece 101, an output channel 22 connected to the vibration disk 21 for orderly horizontal output of the first workpiece 101, a disk 23 located at the end of the output channel 22 and capable of vertical rotation, an inlet and outlet 231 concave on the outer periphery of the disk 23 for horizontal entry of the first workpiece 101 into the output channel 22, and an inlet and outlet 231 for driving the disk 23 to rotate vertically to facilitate the inlet and outlet 23. Driver 24 for switching between horizontal and top positions, used when the inlet and outlet 231 Push rod cylinder assembly 25 that lifts the first workpiece 101 upwards from the bottom at the top position.

In an embodiment of the present disclosure, wherein the pressure block 9 is provided with an arm body 91 distributed front and rear for pressing the third workpiece 103 from top to bottom when the first workpiece 101 and the second workpiece 102 are clamped into the third workpiece 103, and there is a gap 92 between the front and rear arm bodies 91 for the clamping component 7 to pass up and down.

In an embodiment of the present disclosure, wherein the second workpiece 102 is a spring, and one end of the first workpiece 101 facing the second workpiece 102 is provided with an opening 1011 for one end of the second workpiece 102 to extend into it.

In an embodiment of the present disclosure, wherein the clamping component 7 comprises a first clamping block 71 set on the second seat 60, a second clamping block 73 that can move left and right through a fifth driving mechanism 72 connected to the second seat 60 for approaching the second clamping block 73 away from the first clamping block 71, wherein the first clamping block 71 is provided with a first card opening 711 that opens downwards and opens in the direction of the second clamping block 73 for the first workpiece 101 to be clamped upwards when in place, and the second clamping block 71 is provided with a first card opening 711 that opens downwards and opens upwards towards the second clamping block 73. The block 73 is equipped with a second locking port 731 that is opened downwards and in the direction of the first clamping block 71 for downward clamping of the second workpiece 102 when in place. The first locking port 711 A clamping space is formed between the first workpiece 101 and the second workpiece 102 for clamping them together, and the first clamping block 71 is provided with a first blocking portion 712 for hindering the first workpiece 101 from moving away from the second workpiece 102 when clamping the first workpiece 101 and the second workpiece 102 together. The second clamping block 73 is provided with a second blocking portion for hindering the second workpiece 102 from moving away from the first workpiece 101 when clamping the first workpiece 101 and the second workpiece 102 together. 732.

In an embodiment of the present disclosure, wherein the second bayonet 731 is connected to the left and right, the second blocking part 732 is divided into two pieces, and they are opposite to each other on the inner walls before and after the second bayonet 731.

In an embodiment of the present disclosure, wherein one side wall of the end of the horizontal rod 3 is provided with a magnetic block 31 for magnetic attraction of the second workpiece 102 to make the corresponding side of the second workpiece 102 adhere to the horizontal rod 3.

In an embodiment of the present disclosure, wherein a groove 32 is provided on the side wall of the horizontal rod 3,The magnetic block 31 is stuck in the groove 32 or bonded to the groove 32.

In an embodiment of the present disclosure, wherein the horizontal rod 3 on the connecting piece 12 are two, distributed in front and behind.

Compared with prior art, the beneficial effects of the present invention are:
1. The structure of the present disclosure is simple and easy to implement. The setting of the first driving mechanism on the device body facilitates the left and right movement of the first seat body, passing through the feeding mechanism, horizontal rod, and limit seat, and ultimately facilitating the clamping component to pass through the feeding mechanism, horizontal rod, and limit seat. The setting of the second driving mechanism on the first seat body facilitates the up and down movement of the second seat body, and ultimately facilitates the up and down movement of the clamping component, with good practicality; Compared with existing technology, the setting of a clamping component in the present disclosure eliminates the need for the workpiece to relay between the clamping jaws, making it more convenient to implement and beneficial for energy conservation; In addition, the setting of the pressure block connected to the second seat is driven by a third driving mechanism. In specific implementation, on the one hand, it is convenient to first press the third workpiece from top to bottom when clamping the first and second workpieces into the third workpiece from top to bottom, to prevent its displacement. On the other hand, it prevents the situation of lifting the workpiece when the clamping component moves upwards after assembly is completed, which has good practicality; The setting of the fourth driving mechanism and connecting components, as well as the setting of second workpieces at both ends of each horizontal rod, facilitate the replacement of workpieces by driving the connecting components to rotate horizontally when the second workpiece at one end of the horizontal rod is removed.
2. The clamping component described in the present disclosure is easy to implement. The first clamp of the first clamp block is set to facilitate the upward clamping of the first workpiece, with good practicality. The second clamp of the second clamp block is set to facilitate the clamping of the second workpiece set on the horizontal rod from top to bottom, with good practicality. The first blocking part of the first clamp block is set and the second blocking part of the second clamp block is set, which facilitates the effective clamping of the first workpiece and the second workpiece together when driving the second clamp block to approach the first clamp block. Moreover, the first clamp block and the second clamp block themselves are not movable claw mechanisms, occupying space. Smaller, which is conducive to the subsequent clamping and assembly of the first and second workpieces together into the third workpiece, and has good practicality.

### BRIEF DESCRIPTION OF DRAWINGS

FIG. 1 is one of the structural diagrams of the present disclosure.
FIG. 2 is the second structural diagram of the present disclosure.
FIG. 3 is the third structural diagram of the present disclosure, with reference number 1021 indicating the free end of spring 102.
FIG. 4 is the fourth structural diagram of the present disclosure.
FIG. 5 is the structural diagram of the present disclosure.
FIG. 6 is the sixth structural diagram of the present disclosure.
FIG. 7 is the structural diagram of the present disclosure.
FIG. 8 is the eighth structural diagram of the present disclosure.
FIG. 9 is a structural diagram of the present case, which is another layout diagram of the present device.
FIG. 10 is the tenth structural diagram of the present disclosure.

### DETAILED DESCRIPTION OF ILLUSTRATIVE EMBODIMENTS

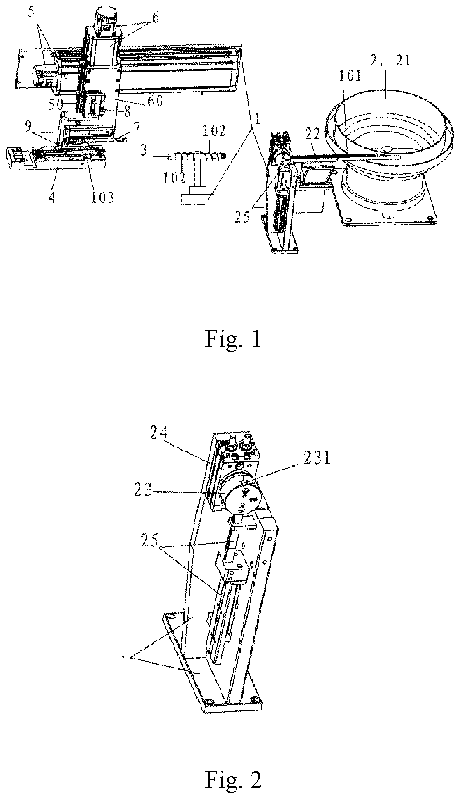

TThe following provides further detailed explanations of the features of the present invention and other related features through embodiments, in order to facilitate the understanding of technical personnel in the same industry:
As shown in FIGs. 1 to 10, A device for assembling three workpieces together, comprising a device body 1, wherein the device body 1 is provided with a feeding mechanism 2 for outputting a first workpiece 101 upwards, a horizontal rod 3 for providing a second workpiece 102 to be placed on it, and a limit seat 4 for limiting the third workpiece 103. The device body 1 is driven by a first driving mechanism 5 to be connected to a first seat 50 that can move left and right through the feeding mechanism 2, a horizontal rod 3, and a limit seat 4. The first seat 50 is driven by The second driving mechanism 6 is connected to a second seat 60 that can move up and down, and the second seat 60 is provided with a first workpiece 101 for receiving the upward output Afterwards, the first workpiece 101 and the second workpiece 102 are clamped together to facilitate the subsequent clamping of both into the third workpiece 103 from top to bottom. The clamping component 7 is connected to the second seat 60 through a third driving mechanism 8, which is capable of moving up and down. When the first workpiece 101 and the second workpiece 102 are clamped into the third workpiece 103 from top to bottom, a pressing block 9 is connected to the third workpiece 103 from top to bottom. The device body 1 is driven by a fourth driving mechanism 11, which is connected to a connecting piece that can rotate horizontally. The middle of the horizontal rod 3 is installed on the connecting piece 12, and a second workpiece 102 is sleeved at both ends of each horizontal rod 3.

As mentioned above, in specific implementation, the second workpiece 102 can be manually or mechanically placed on the horizontal rod 3, and the third workpiece 103 can be placed on the limit seat 4 through manual or machine positioning. In addition, during specific implementation, the left, middle, and right positions of the limit seat 4, horizontal rod 3, and feeding mechanism 2 are arranged so that the clamping component 7 can approach the first workpiece 101, the second workpiece 102, and the third workpiece 103 through left and right movement and up and down movement.

As mentioned above, the structure of the present disclosure is simple and easy to implement. The setting of the first driving mechanism 5 on the device body 1 facilitates the left and right movement of the first seat body 50, passing through the feeding mechanism 2, horizontal rod 3, and limit seat 4, and ultimately facilitating the clamping component 7 to pass through the feeding mechanism 2, horizontal rod 3, and limit seat 4. The setting of the second driving mechanism 6 on the first seat body 50 facilitates the up and down movement of the second seat body 60, and ultimately facilitates the up and down movement of the clamping component 7, with good practicality; Compared with existing technology, the setting of a clamping component 7 in the present disclosure eliminates the need for the workpiece to relay between the clamping jaws, making implementation more convenient and beneficial for energy conservation; In addition, the setting of the pressure block 9 connected to the second seat 60 is driven by a third driving mechanism 8. In specific implementation, on the one hand, it is convenient to first press the third workpiece 103 from top to bottom when clamping the first workpiece 101 and the second workpiece 102 into the third workpiece 103 from top to bottom, preventing it from shifting. On the other hand, it prevents the situation of lifting the workpiece when the clamping component 7 moves upwards after assembly is completed, which has good practicality; The setting of the fourth driving mechanism 11, the connecting piece 12, and the setting of the second workpiece 102 at both ends of each horizontal rod 3 are respectively set, so that when the second workpiece 102 at one end of the horizontal rod 3 is taken away, the workpiece can be replaced and supplemented by driving the connecting piece 12 to rotate horizontally.

As shown in FIG. 1, during specific implementation, the feeding mechanism 2 comprises a vibration disk 21 for vibration output of a first workpiece 101, an output channel 22 connected to the vibration disk 21 for orderly horizontal output of the first workpiece 101, a disk 23 located at the end of the output channel 22 and capable of vertical rotation, an inlet and outlet 231 concave on the outer periphery of the disk 23 for horizontal entry of the first workpiece 101 into the output channel 22, and an inlet and outlet 231 for driving the disk 23 to rotate vertically to facilitate the inlet and outlet 23. Driver 24 for switching between horizontal and top positions, used when the inlet and outlet 231 Push rod cylinder assembly 25 that lifts the first workpiece 101 upwards from the bottom at the top position. The push rod cylinder assembly 25 is easy to implement and facilitates changing the orientation of the first workpiece 101 for output.

As mentioned above, in the specific implementation, if the power is insufficient when the first workpiece 101 horizontally enters the inlet and outlet 231 in the feeding mechanism 2 of the present disclosure, the first workpiece 101 can be sent into the inlet and outlet 231 by adding a power jet component, a conveyor belt component, or a pushing component.

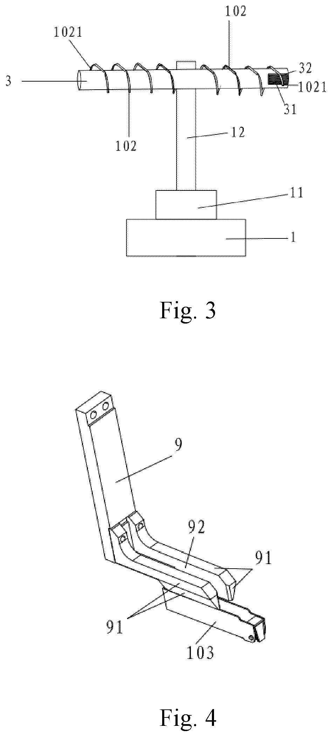

As shown in FIG. 4, during specific implementation, the pressure block 9 is provided with an arm body 91 distributed front and rear for pressing the third workpiece 103 from top to bottom when the first workpiece 101 and the second workpiece 102 are clamped into the third workpiece 103, and there is a gap 92 between the front and rear arm bodies 91 for the clamping component 7 to pass up and down.

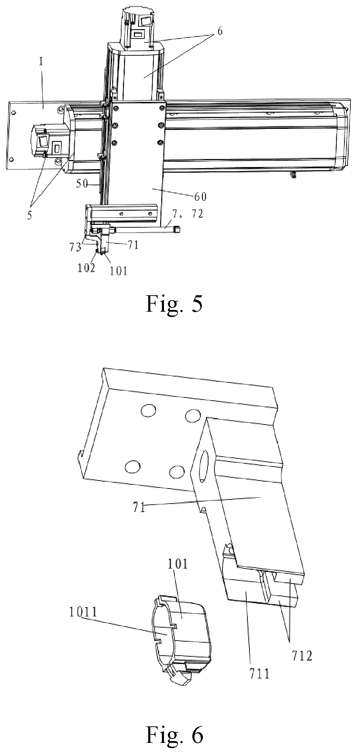

As shown in FIGs. 5, 6, 7, and 8, in specific implementation, the second workpiece 102 is a spring, and one end of the first workpiece 101 facing the second workpiece 102 is provided with an opening 1011 for one end of the second workpiece 102 to extend into it.

As shown in FIGs. 5, 6, 7, and 8, during specific implementation, the clamping component 7 comprises a first clamping block 71 set on the second seat 60, a second clamping block 73 that can move left and right through a fifth driving mechanism 72 connected to the second seat 60 for approaching the second clamping block 73 away from the first clamping block 71, wherein the first clamping block 71 is provided with a first card opening 711 that opens downwards and opens in the direction of the second clamping block 73 for the first workpiece 101 to be clamped upwards when in place, and the second clamping block 71 is provided with a first card opening 711 that opens downwards and opens upwards towards the second clamping block 73. The block 73 is equipped with a second locking port 731 that is opened downwards and in the direction of the first clamping block 71 for downward clamping of the second workpiece 102 when in place. The first locking port 711 A clamping space is formed between the first workpiece 101 and the second workpiece 102 for clamping them together, and the first clamping block 71 is provided with a first blocking portion 712 for hindering the first workpiece 101 from moving away from the second workpiece 102 when clamping the first workpiece 101 and the second workpiece 102 together. The second clamping block 73 is provided with a second blocking portion for hindering the second workpiece 102 from moving away from the first workpiece 101 when clamping the first workpiece 101 and the second workpiece 102 together.

As mentioned above, the clamping component 7 described in the present disclosure is easy to implement, and the first clamping port 711 of the first clamping block 71 is set to facilitate the upward clamping of the first workpiece 101, with good practicality. The second clamping port 731 of the second clamping block 73 is set to facilitate the clamping of the second workpiece 102 sleeved on the horizontal rod 3 from top to bottom, with good practicality. The first blocking part 712 of the first clamping block 71 and the second blocking part 732 of the second clamping block 73 are set to facilitate the effective clamping of the first workpiece 101 and the second workpiece 102 when driving the second clamping block 73 to approach the first clamping block 71. When used together, and the first clamping block 71 and the second clamping block 73 are not movable claw mechanisms themselves, occupying less space, It is beneficial for the subsequent assembly of the first workpiece 101 and the second workpiece 102 clamped together into the third workpiece 103, and has good practicality.

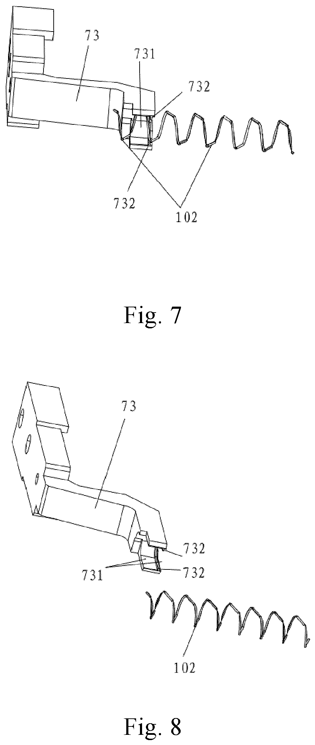

As shown in FIGs. 7 and 8, during the specific implementation, the second bayonet 731 is connected to the left and right, the second blocking part 732 is divided into two pieces, and they are opposite to each other on the inner walls before and after the second bayonet 731, so as to facilitate the left and right extension of the second workpiece 102.

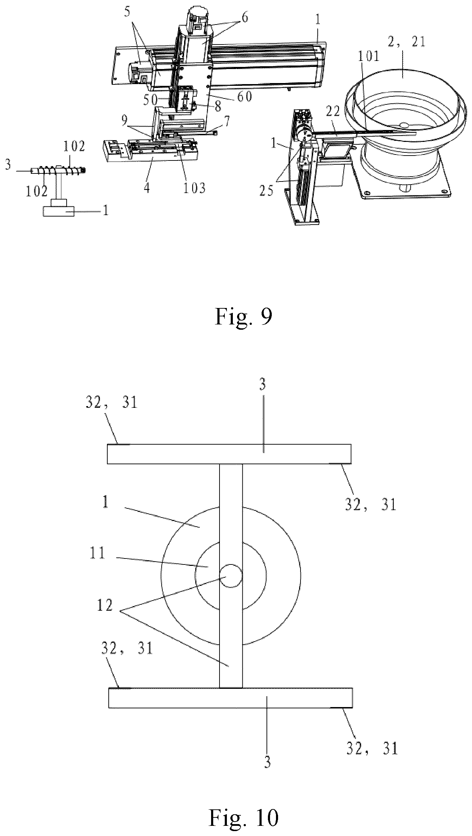

As shown in FIGs. 3 and 10, during specific implementation, one side wall of the end of the horizontal rod 3 is provided with a magnetic block 31 for magnetic attraction of the second workpiece 102 to make the corresponding side of the second workpiece 102 adhere to the horizontal rod 3.

As mentioned above, in specific use, the second workpiece 102 can be manually placed on the horizontal rod 3, and the second workpiece 102 can be placed on the free end 1021 on the outer side of the horizontal rod 3 corresponding to the position of the magnetic block 31.

As mentioned above, the setting of the magnetic block 31 in the present disclosure facilitates the magnetic attraction of the second workpiece 102, so as to make the corresponding free end 1021 on the second workpiece 102 adhere to the side wall of the horizontal rod 3, achieve magnetic attraction positioning of the free end 1021, and avoid the problem of the free end 1021 not sticking tightly to the horizontal rod 3 and affecting the subsequent assembly quality, which has good practicality.

As shown in FIGs. 3 and 10, during specific implementation, a groove 32 is provided on the side wall of the horizontal rod 3,The magnetic block 31 is stuck in the groove 32 or bonded to the groove 32, which is convenient for implementation.

As shown in FIG. 10, during the specific implementation, the horizontal rod 3 on the connecting piece 12 are two, distributed in front and behind, which facilitates the horizontal rotation of the connecting piece 12 by 180 degrees and exchanges the position of the horizontal rod 3, facilitating the rotation of the second workpiece 102 up and down.
As mentioned above, the present disclosure protects a device for assembling three workpieces together, and all technical solutions that are the same or similar to the present disclosure should be shown as falling within the protection scope of the present disclosure.

## Claims

1. A device for assembling three workpieces together, comprising a device body (1), wherein the device body (1) is provided with a feeding mechanism (2) for outputting a first workpiece (101) upwards, a horizontal rod (3) for providing a second workpiece (102) to be placed on it, and a limit seat (4) for limiting the third workpiece (103). The device body (1) is driven by a first driving mechanism (5) to be connected to a first seat (50) that can move left and right through the feeding mechanism (2), a horizontal rod (3), and a limit seat (4). The first seat (50) is driven by The second driving mechanism (6) is connected to a second seat (60) that can move up and down, and the second seat (60) is provided with a first workpiece (101) for receiving the upward output Afterwards, the first workpiece (101) and the second workpiece (102) are clamped together to facilitate the subsequent clamping of both into the third workpiece (103) from top to bottom. The clamping component (7) is connected to the second seat (60) through a third driving mechanism (8), which is capable of moving up and down. When the first workpiece (101) and the second workpiece (102) are clamped into the third workpiece (103) from top to bottom, a pressing block (9) is connected to the third workpiece (103) from top to bottom. The device body (1) is driven by a fourth driving mechanism (11), which is connected to a connecting piece that can rotate horizontally. The middle of the horizontal rod (3) is installed on the connecting piece (12), and a second workpiece (102) is sleeved at both ends of each horizontal rod (3).

2. The device for assembling three workpieces together according to claim 1, wherein the feeding mechanism (2) comprises a vibration disk (21) for vibration output of a first workpiece (101), an output channel (22) connected to the vibration disk (21) for orderly horizontal output of the first workpiece (101), a disk (23) located at the end of the output channel (22) and capable of vertical rotation, an inlet and outlet (231) concave on the outer periphery of the disk (23) for horizontal entry of the first workpiece (101) into the output channel (22), and an inlet and outlet (231) for driving the disk (23) to rotate vertically to facilitate the inlet and outlet (23). Driver (24) for switching between horizontal and top positions, used when the inlet and outlet (231) Push rod cylinder assembly (25) that lifts the first workpiece (101) upwards from the bottom at the top position.

3. The device for assembling three workpieces together according to claim 1, wherein the pressure block (9) is provided with an arm body (91) distributed front and rear for pressing the third workpiece (103) from top to bottom when the first workpiece (101) and the second workpiece (102) are clamped into the third workpiece (103), and there is a gap (92) between the front and rear arm bodies (91) for the clamping component (7) to pass up and down.

4. The device for assembling three workpieces together according to claim 1, wherein the second workpiece (102) is a spring, and one end of the first workpiece (101) facing the second workpiece (102) is provided with an opening (1011) for one end of the second workpiece (102) to extend into it.

5. The device for assembling three workpieces together according to claim 1, wherein the clamping component (7) comprises a first clamping block (71) set on the second seat (60), a second clamping block (73) that can move left and right through a fifth driving mechanism (72) connected to the second seat (60) for approaching the second clamping block (73) away from the first clamping block (71), wherein the first clamping block (71) is provided with a first card opening (711) that opens downwards and opens in the direction of the second clamping block (73) for the first workpiece (101) to be clamped upwards when in place, and the second clamping block (71) is provided with a first card opening (711) that opens downwards and opens upwards towards the second clamping block (73). The block (73) is equipped with a second locking port (731) that is opened downwards and in the direction of the first clamping block (71) for downward clamping of the second workpiece (102) when in place. The first locking port (711) A clamping space is formed between the first workpiece (101) and the second workpiece (102) for clamping them together, and the first clamping block (71) is provided with a first blocking portion (712) for hindering the first workpiece (101) from moving away from the second workpiece (102) when clamping the first workpiece (101) and the second workpiece (102) together. The second clamping block (73) is provided with a second blocking portion for hindering the second workpiece (102) from moving away from the first workpiece (101) when clamping the first workpiece (101) and the second workpiece (102) together.

6. The device for assembling three workpieces together according to claim 5, wherein the second bayonet (731) is connected to the left and right, the second blocking part (732) is divided into two pieces, and they are opposite to each other on the inner walls before and after the second bayonet (731).

7. The device for assembling three workpieces together according to claim 1, wherein one side wall of the end of the horizontal rod (3) is provided with a magnetic block (31) for magnetic attraction of the second workpiece (102) to make the corresponding side of the second workpiece (102) adhere to the horizontal rod (3).

8. The device for assembling three workpieces together according to claim 7, wherein a groove (32) is provided on the side wall of the horizontal rod (3),The magnetic block (31) is stuck in the groove (32) or bonded to the groove (32).

9. The device for assembling three workpieces together according to claim 7, wherein the horizontal rod (3) on the connecting piece (12) are two, distributed in front and behind.
